# EUROPEAN PATENT APPLICATION

(11) **EP 1 939 708 A2**
(43) Date of publication of application: **02.07.2008**
(21) Application number: 07117781.0
(22) Date of filing: 02.10.2007
(51) Int. Cl.: G06F 1/04

(54) **System clock supplying device and frequency shift determining method of master oscillator**

(30) Priority: 18.12.2006 JP 2006339416
(71) Applicant: Fujitsu Ltd., Kawasaki-shi, Kanagawa 211-8588 (JP)
(72) Inventor: Yoda,, Hiroyoshi, Kawasaki-shi, Kanagawa 211-8588 (JP); Okada,, Narimasa, Kawasaki-shi, Kanagawa 211-8588 (JP)
(74) Representative: Stebbing, Timothy Charles

(57) **Abstract**

A system clock supplying device having a duplex structure formed by an own system and another system configured to generate a system clock based on output of a master oscillator in an own device, the system clock supplying device includes a frequency shift measuring determining part configured to measure frequency shift between a reference clock for system synchronization supplied from an outside and a clock output from a master oscillator of the own system and configured to send a frequency shift determining result based on the measuring result to a system clock supplying device of another system; and an abnormality portion determining part configured to determine whether the frequency shift is generated in an output clock of the master oscillator of the own system, an output clock of the master oscillator of the other system or the reference clock, on the basis of a frequency shift determining result of the master oscillator of the own system obtained from the frequency shift measuring determining part of the own system and frequency shift determining result of the master oscillator of the other system obtained from the frequency shift measuring determining part of the other system.

## Description

### BACKGROUND OF THE INVENTION

### 1. Field of the Invention

The present invention generally relates to system clock supplying devices and frequency shift determining methods of master oscillators, and more specifically, to a system clock supplying device and a frequency shift determining method of a master oscillator whereby determination of frequency shift, identification of an abnormal portion, and prevention of frequency change of each master oscillator in a system clock supplying device having a duplex structure can be performed.

### 2. Description of the Related Art

A clock reference signal of frequency with high precision is required for a base station of a mobile communication system or the like. It is general practice to use an OCXO (Oven Controlled X(crystal) Oscillator) having an oven having good temperature stability as a master oscillator of the clock reference signal. However, stability with time is not guaranteed for even the OCXO having an oven.

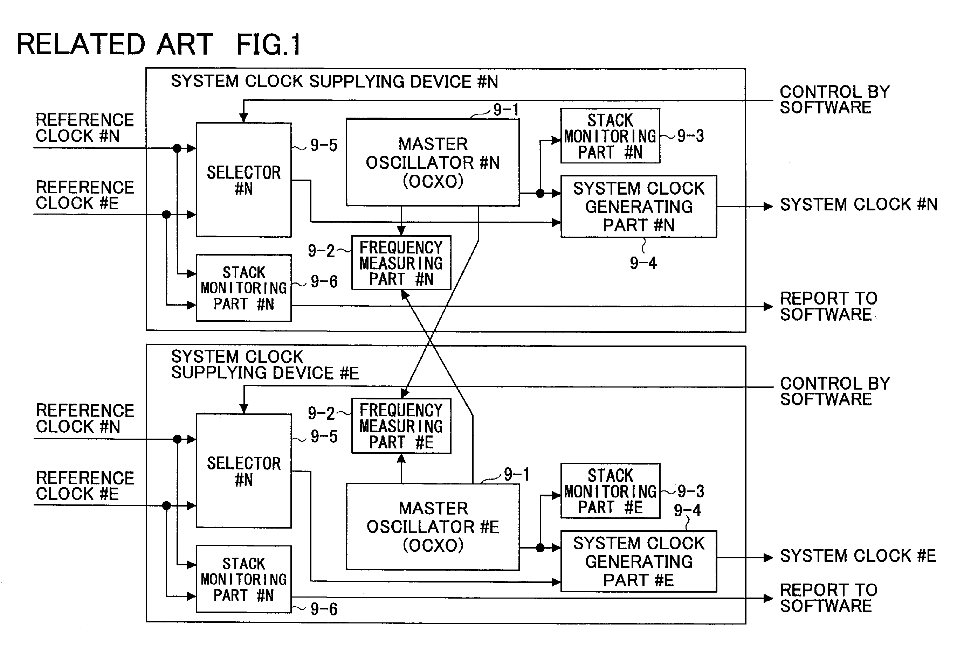

FIG. 1 is a block diagram of a related art system clock supplying device having a duplex structure. As shown in FIG. 1, the system clock supplying device having the duplex structure has a structure where master oscillators (#N, #E) 9-1 using the OCXO have an oven, frequency measuring parts (#N, #E) 9-2, stack monitoring parts (#N, #E) 9-3, system clock generating parts (#N, #E) 9-4, selectors (#N, #E) 9-5, and stack monitoring parts (#N, #E) 9-6 are provided in a system clock supplying device of a duplex system having an N system (normal system, active system) and an E system (emergency system, backup system).

The frequency shift of the master oscillators (#N, #E) 9-1 cannot be detected by the master oscillators (#N, #E) 9-1. Therefore, a low stack or high stack state where output signals of the master oscillators (#N, #E) 9-1 are in low levels or high levels is detected by the stack monitoring parts (#N, #E) that are external circuits. In addition, output signals of the master oscillators (#N, #E) 9-1 of the N system and the E system are compared with each other by the frequency measuring parts (#N, #E) 9-2 so that the frequency shift is detected.

The selectors (#N, #E) report a low stack or high stack state where the stack monitoring parts (#N, #E) 9-6 are in low levels or high levels, to software of an external device. Depending on the stack state, a select signal of a selector from software is controlled.

Japanese Laid-Open Patent Application Publication No. 2006-140801 describes means for coping with frequency shift based on change with time of a master oscillator and sudden frequency change. More specifically, Japanese Laid-Open Patent Application Publication No. 2006-140801 describes a frequency reference signal generating device having signal generating devices OSC1 to OSCn wherein "n" is an integer equal to or greater than three, and output signal switching means SW for inputting output signals of n signal generating devices and outputting an output signal of the signal generating devices as a reference signal, wherein output of n-1 frequency detecting means is output to the outside, and the output signal switching means SW is controlled by the outside based on the output of n-1 frequency detecting means.

In order to guarantee the stability with time of the OCXO having an oven, correction on the basis of a signal of a high stability signal source wherein a cesium clock having high stability works as a source of oscillation is required. However, the signal source is expensive and causes making the device to have a large size and be complex.

The device situated at the base station of the mobile communication system or the like should have a structure where a clock reference signal having high precision and high reliability is sent. However, since space saving and cost saving are highly demanded, it is not preferable to add a new circuit board (card) or replace one with an expensive oscillating source.

In addition, in the related art structure where the output signals of the master oscillators in the N system and the E system are compared to each other so that the frequency shift is detected, even if the frequency shift in between the N system and the E system can be detected, it is not possible to identify the output signal of which master oscillator is abnormal. In addition, even if the abnormality of the reference clock is detected, control is performed via outside software, so that it is not possible to immediately switch to the normal system.

In this case, since output of the abnormal portion cannot be avoided, degradation of line quality occurs due to shift of the frequency of the clock frequency signal or spread of an abnormal electric wave due to sending the abnormal frequency signal. In addition, in a structure where an expensive and large scale oscillator is provided so that the frequency shift of the master oscillator is determined, space savings and cost savings cannot be achieved.

### SUMMARY OF THE INVENTION

Accordingly, embodiments of the present invention may provide a novel and useful system clock supplying device and frequency shift determining method of a master oscillator solving one or more of the problems discussed above.

More specifically, the embodiments of the present invention may provide a system clock supplying device and a frequency shift determining method of a master oscillator, whereby, without providing an oscillator for detecting frequency shift of a master oscillator in a system clock supplying device having a duplex structure, it is possible to identify not only the frequency shift of the system clock supplying device but also an abnormal portion with a reference clock to be input and prevent signal sending of the master oscillator generating the frequency shift.

One aspect of the present invention may be to provide a system clock supplying device having a duplex structure formed by an own system and another system configured to generate a system clock based on output of a master oscillator in an own device, the system clock supplying device including: a frequency shift measuring determining part configured to measure frequency shift between a reference clock for system synchronization supplied from an outside and a clock output from a master oscillator of the own system and configured to send a frequency shift determining result based on the measuring result to a system clock supplying device of another system; and an abnormality portion determining part configured to determine whether the frequency shift is generated in an output clock of the master oscillator of the own system, an output clock of the master oscillator of the other system or the reference clock, on the basis of a frequency shift determining result of the master oscillator of the own system obtained from the frequency shift measuring determining part of the own system and frequency shift determining result of the master oscillator of the other system obtained from the frequency shift measuring determining part of the other system.

Another aspect of the present invention may be to provide a frequency shift determining method of a master oscillator of a system clock supplying device having a duplex structure formed by an own system and another system configured to generate a system clock based on output of a master oscillator in an own device, the frequency shift determining method including: a frequency shift measuring determining step of measuring frequency shift between a reference clock for system synchronization supplied from an outside and a clock output from a master oscillator of the own system and sending a frequency shift determining result based on the measuring result to a system clock supplying device of the other system; and an abnormality portion determining step of determining whether the frequency shift is generated in an output clock of the master oscillator of the own system, an output clock of the master oscillator of the other system or the reference clock, on the basis of a frequency shift determining result of the master oscillator of the own system obtained in the frequency shift measuring determining step of the own system and frequency shift determining result of the master oscillator of the other system obtained from the frequency shift measuring determining part of the other system.

Other objects, features, and advantages of the present invention will be come more apparent from the following detailed description when read in conjunction with the accompanying drawings.

### BRIEF DESCRIPTION OF THE DRAWINGS

FIG. 1 is a block diagram of a related art system clock supplying device having a duplex structure;
FIG. 2 is a block diagram of a system clock supplying device of an embodiment of the present invention;
FIG. 3 is a block diagram showing a structural example of a frequency shift measuring part;
FIG. 4 is a timing chart of monitoring/determining frequency shift at a count threshold value monitoring part;
FIG. 5 is a block diagram of an error detection protecting part;
FIG. 6 is a flowchart of operations of frequency abnormality detection/release display at the error detection protecting part;
FIG. 7 is a view showing a connection structure of an abnormal portion determining part (#N, #E) and determining logic;
FIG. 8 is a block diagram showing functions of the abnormal portion determining part; and
FIG. 9 is a flowchart of a process at the time when the frequency shift is detected at the abnormal portion determining part.

### DETAILED DESCRIPTION OF THE PREFERED EMBODIMENTS

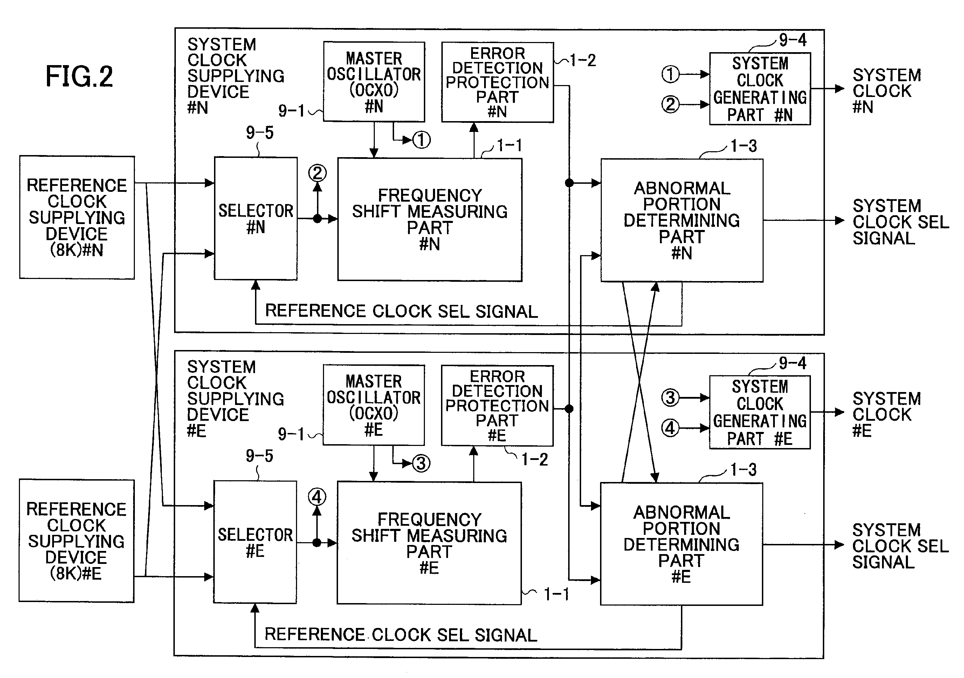

A description is given below, with reference to the FIG. 2 through FIG. 9 of embodiments of the present invention.

FIG. 2 is a block diagram of a system clock supplying device of an embodiment of the present invention.

As shown in FIG. 2, the system clock supplying device has a duplex structure where two systems of the system clock supplying devices are provided. One is an N system (normal system, active system) and the other is an E system (emergency system, backup system). Each system clock supplying device includes a master oscillator (#N, #E) 9-1, a selector (#N, #E) 9-5, a frequency shift measuring part (#N, #E) 1-1, an error detection protecting part (#N, #E) 1-2, an abnormal portion determining part (#N, #E) 1-3, and a system clock generating part (#N, #E) 9-4.

The master oscillator (#N, #E) 9-1 uses an OCXO (Oven Controlled X(crystal) Oscillator) having an oven. The selector (#N, #E) 9-5 selects one of reference clocks of two systems supplied from outside. The frequency shift measuring part (#N, #E) 1-1 measures the frequency shift between the reference clock and the output clock of the master oscillator (#N, #E) 9-1. The error detection protecting part (#N, #E) 1-2 evaluates error detection of the frequency shift. The abnormal portion determining part (#N, #E) 1-3 determines in which of output clock and reference clock of the master oscillators (#N, #E) 9-1 of two systems abnormality occurs. The system clock generating part (#N, #E) 9-4 generates a system clock on the basis of the master oscillator (#N, #E) 9-1.

Thus, in the embodiment of the present invention compared to the related art, the frequency shift measuring part (#N, #E) 1-1, the error detection protecting part (#N, #E) 1-2, and the abnormal portion determining part (#N, #E) 1-3 are added.

The frequency shift measuring part (#N, #E) 1-1 measures the frequency or a cycle of the reference clock by using a clock of the master oscillator (#N, #E) 9-1 as reference. The error detection protecting part (#N, #E) 1-2 determines whether frequency shift detected by the frequency shift measuring part (#N, #E) 1-1 occurs at designated times and outputs abnormality generating information on the basis of the result of determination.

The abnormal portion determining part (#N, #E) 1-3 starts determination on the basis of the abnormality generating information from the error detection protecting part (#N, #E) 1-2. The abnormal portion determining part (#N, #E) 1-3 receiving the abnormality generating information collects information from the error detection protecting part (#N, #E) 1-2 of the other system so as to implement comprehensive determination.

If the abnormality generating information of the frequency shift is received from only the error detection protection part 1-2 of its own system, it is determined that the frequency shift is generated at the reference clock or the master oscillator 9-1 provided at an own card so that a suspicious portion can be known.

Similarly, if the abnormality generating information of the frequency shift is received from the error detection protection part 1-2 of another system, it is determined that the frequency shift is generated at the reference clock or the master oscillator 9-1 provided at another own card so that a suspicious portion can be known.

Clocks of the system clock supplying devices of own system and another system where the OCXO with high precision is provided as the master oscillator 9-1 and the reference clock provided to an entire system made of Rb (rubidium) or cesium (Cs) mostly do not generate the frequency shift simultaneously.

By using this, when two clocks of the above-mentioned three clocks are determined as normal, it is determined that the frequency shift is generated at the remaining clock. This is an operations principle of the abnormal position determining part 1-3.

The structures of the frequency shift measuring part (#N, #E) 1-1 and the error detection protecting part (#N, #E) 1-2 correspond to a frequency shift measuring determining part of claims mentioned below. The error detection protecting part (#N, #E) 1-2 corresponds to an error detection protection part of claims mentioned below. The abnormal portion determining part (#N, #E) 1-3 corresponds to an abnormal portion determining part of claims mentioned below.

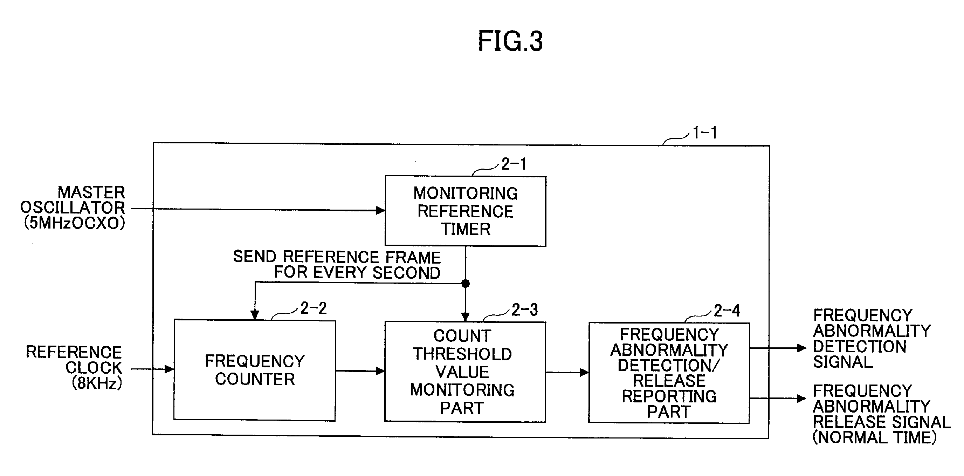

FIG. 3 is a block diagram showing a structural example of the frequency shift measuring part 1-1. The frequency shift measuring part 1-1 shown in FIG. 3 generates a reference frame signal with a predetermined time interval such as one second by a monitoring reference timer 2-1 using a counter which counts a clock of 5 MHz, for example, being output from the above-mentioned master oscillator 9-1 so that the reference frame signal is input to the frequency counter 2-2 and the count threshold value monitoring part 2-3.

The frequency counter 2-2 counts a rising edge of a reference clock of, for example, 8 kHz, extracted from the line, for every one cycle (counter gate time) of a reference frame signal sent from the monitoring reference timer 2-1. The count value is input to the count threshold value monitoring part 2-3.

In the count threshold value monitoring part 2-3, a determining threshold value for determining frequency shift between the reference clock and the output clock of the master oscillator is preset. The count threshold value monitoring part 2-3 compares a count value of the frequency counter 2-2 within the counter gate time (one second in this example) generated by the monitoring reference timer 2-1 with the determining threshold value so as to monitor or determine the frequency shift.

The result of monitoring or determination of the count threshold value monitoring part 2-3 is reported to a frequency abnormality detection/release reporting part 2-4. The frequency abnormality detection/release reporting part 2-4 outputs, on the basis of the result of monitoring or determination reported from the count threshold value monitoring part 2-3, a frequency abnormality detection signal and a frequency abnormality release signal (normal time) indicating a frequency abnormality state and a release state.

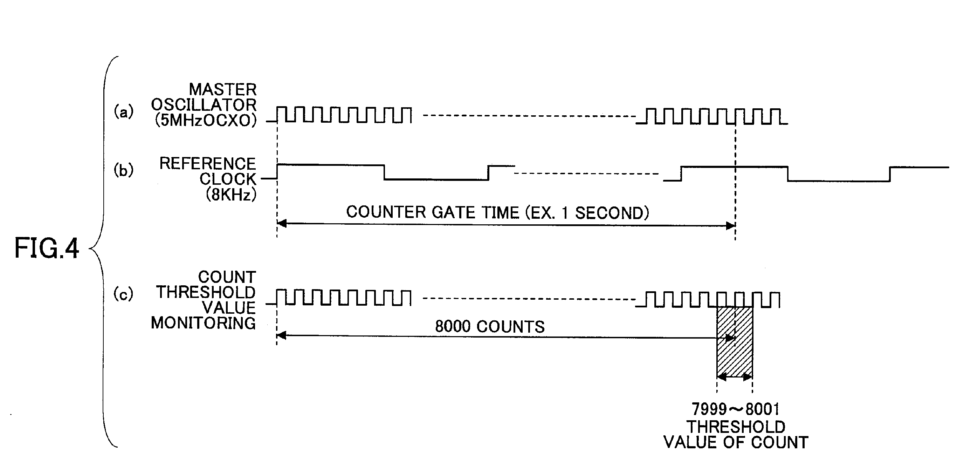

FIG. 4 is a timing chart of monitoring/determining the frequency shift at the count threshold value monitoring part 2-3. More specifically, FIG. 4(a) shows an output signal (5 MHz) of the master oscillator 9-1. FIG. 4(b) shows a reference clock (8 KHz). FIG. 4(c) shows a reference clock counted within the counter gate time (one second in this example) generated by the monitoring reference timer 2-1 on the basis of the output signal of the master oscillator 9-1.

If the reference clock of 8 kHz is securely sent, the rising edges of 8000 times within one second are counted. Because of characteristics of the clock signal, it is necessary to permit deviation compared to the reference clock. As a determining threshold value considering this permitted threshold value, for example, values from lower limit 7999 times from an upper limit 8001 times are set. In a case where the counted value of the reference clock is within this determining threshold value, the master oscillator 9-1 determines the reference clock as normal. In a case where the counted value of the reference clock is out of this determining threshold value, the master oscillator 9-1 determines the reference clock as abnormal. As the counter gate time set by the monitoring reference timer 2-1 is longer, the frequency change is equalize and influence of the frequency shift may not occur.

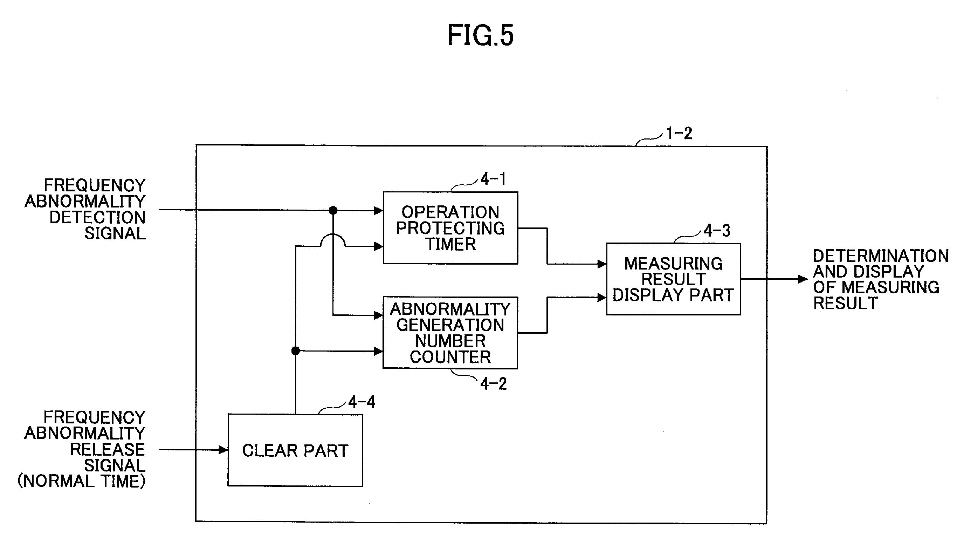

FIG. 5 is a block diagram of the error detection protecting part 1-2. When the error detection protecting part 1-2 receives the frequency abnormality detection signal from the frequency abnormality detection/release reporting part 2-4 of the frequency shift measuring part 1-1, an operations protecting time 4-1 begins operating. A frequency abnormality continuous time is monitored by the operations protecting time 4-1. When the frequency shift of a designated times N is detected within a designated time set in the operations protecting time 4-1 by an abnormality generation number counter 4-2, reliable information about generation of the frequency abnormality is reported to a measuring result display part 4-3.

In a case where the frequency shift is released so that the frequency returns to the normal state within a time designated by the operations protecting time 4-1, on the basis of the frequency abnormality release signal being received from the frequency abnormality detection/release reporting part 2-4, the operations protecting time 4-1 and the abnormality generation number counter 4-2 are cleared (reset) by a clear part 4-4 for preparing for the next frequency abnormality detection. As a result of this, it is possible to prevent error detection of the frequency shift of a short-time frequency change (short break, electric power source change, or the like).

The number of frequency abnormality release (returning to a normal operation) together with the number of the frequency abnormality detection are counted by the abnormality generation number counter 4-2.

The measuring result display part 4-3 performs a logical operation of output of the operation protection timer 4-1 and output from the abnormality generation number counter 4-2, measures whether the frequency shift and its release are continuously generated at designated times, and outputs a display signal indicating generation of the frequency shift and its release based on the measuring result.

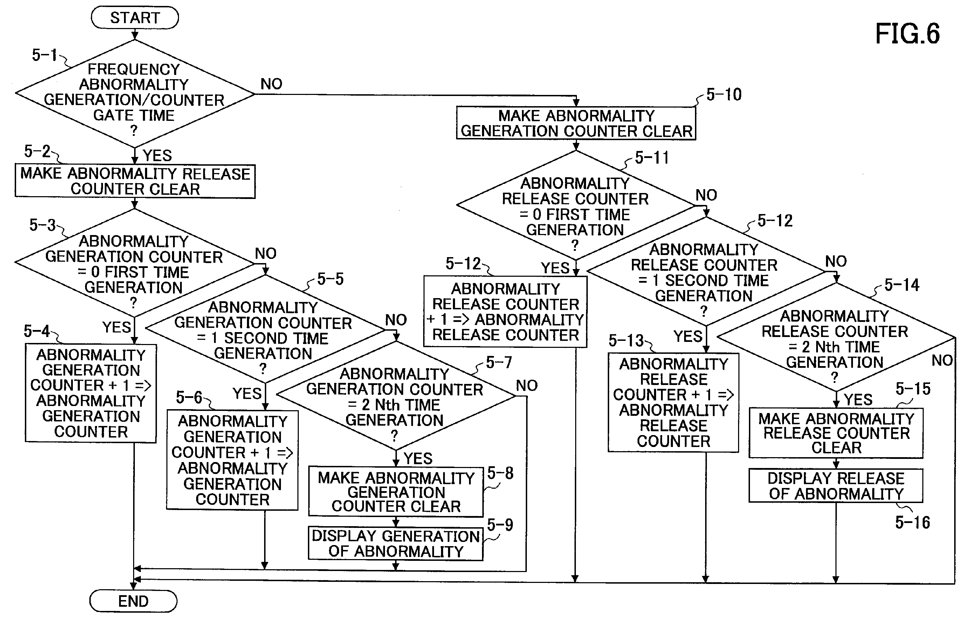

FIG. 6 is a flowchart of operations of frequency abnormality detection/release display at the error detection protecting part 1-2. An operations flow differs depending on whether the error detection protection part 1-2 receives, within the count gate time defined by the operations protecting timer 4-1, the frequency abnormality detection signal or the frequency abnormality release signal.

First, whether the frequency abnormality detection signal is received within the counter gate time is determined in step S5-1. In a case where the frequency abnormality detection signal is received within the counter gate time, an abnormality release number counter is cleared in step S5-2 and whether the value of the abnormality generation number counter is "0", namely whether this is first time generation, is determined in step S5-3. In a case of the first time generation, 1 is added to the abnormality generation number counter in step S5-4 so that the process ends.

In a case where determination of "NO" is made in step S5-3, whether the value of the abnormality generation number counter is "1", namely whether abnormality generation has already occurred one time and this is the second time generation, is determined in step S5-5. In a case of the second time generation, 1 is added to the abnormality generation number counter in step S5-6 so that the process ends.

In a case where determination of "NO" is made in step S5-5, whether the value of the abnormality generation number counter is "2", namely whether abnormality generation has already occurred two times and this is threshold value Nth (N is equal to 3) time generation, is determined in step S5-7. In a case of the Nth time generation, the abnormality release number counter is cleared in step S5-8 and a display signal of the abnormality generation is output in step S5-9.

On the other hand, in a case where determination of "NO" is made in step S5-1, namely in a case where the frequency abnormality detection signal is not received but the frequency abnormality release signal is received within the count gate time, abnormality generation number counter 4-2 is cleared in step S5-10 and whether the value of the abnormality release number counter is "0", namely whether this is first time release, is determined in step S5-11.

In a case of the first time release, 1 is added to the abnormality release number counter in step S5-12 so that the process ends.

In a case where determination of "NO" is made in step S5-11, whether the value of the abnormality release number counter is "1", namely whether abnormality release has already occured one time and this is second time release, is determined in step S5-12. In a case of the second time release, 1 is added to the abnormality release number counter in step S5-13 so that the process ends.

In a case where determination of "NO" is made in step S5-12, whether the value of the abnormality release number counter is "2", namely whether abnormality release has already occurred two times and this is threshold value Nth (N is equal to 3) time release, is determined in step S5-14. In a case of the Nth time release, the abnormality release number counter is cleared in step S5-15 and a display signal of the abnormality release is output in step S5-16.

According to the operation flow shown in FIG. 6, when the frequency abnormality is continuously detected N times for every counter gate time at the time of the frequency abnormality release, the frequency abnormality generation is displayed. In addition, when the frequency abnormality is not detected continuously N times, namely released, for every counter gate time at the time of the frequency abnormality release, the frequency abnormality release is displayed.

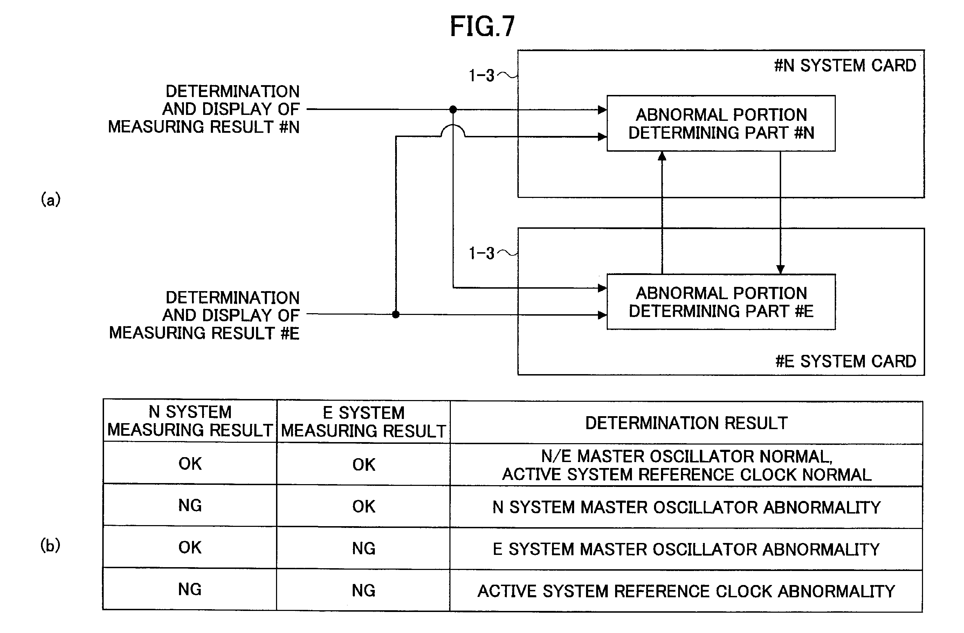

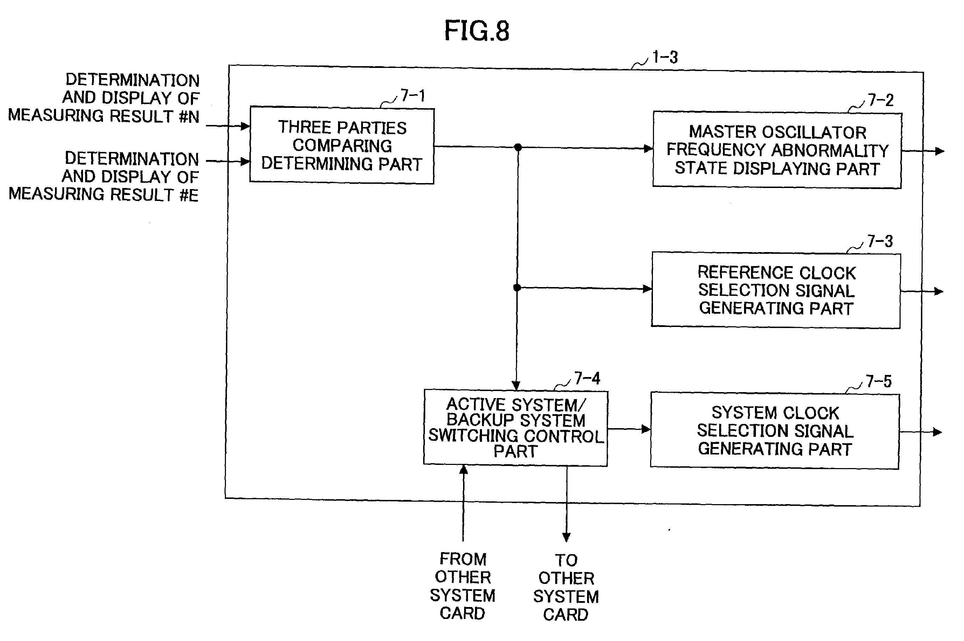

FIG. 7 is a view showing a connection structure of the abnormal portion determining part (#N, #E) 1-3 and determining logic. FIG. 8 is a block diagram showing functions of the abnormal portion determining part 1-3. The abnormal portion determining part (#N, #E) 1-3 inputs information of the result of measurement from the error detection protection part (#N, #E) 1-2 and determines the abnormality portion on the basis of the information by following the determining logic table shown in FIG. 7(b).

In a case where the measuring result of the N system and the E system is good ("OK"), it is determined that the master oscillators 9-1 of the N system card and the E system card are normal and the active system reference clock is normal.

When the abnormality is detected at only the measuring result of the N system, it is determined that the frequency shift may be generated in either reference clock or the master oscillator (#N) 9-1 of the #N system card. However, since the abnormality is not detected at the measuring result of the E system, namely the reference clock and the master oscillator (#E) 9-1 of the #E system card are normal, it is determined that the reference clock is normal and the frequency shift is generated at the master oscillator (#N) 9-1 of the #N system card.

Similarly, when the abnormality is detected at only the measuring result of the E system, it is determined that the frequency shift may be generated in either reference clock or the master oscillator (#E) 9-1 of the #E system card. However, since the abnormality is not detected at the measuring result of the N system, namely the reference clock and the master oscillator (#N) 9-1 of the #N system card are normal, it is determined that the reference clock is normal and the frequency shift is generated at the master oscillator (#E) 9-1 of the #E system card.

When the abnormality is detected at the measuring result of both N system and the E system, it is determined that an obstacle of the frequency shift is generated at the active reference clock.

In the abnormal portion determining part 1-3 shown in FIG. 8, based on the information of measuring result from the error detection protection part (#N, #E) 1-2, a three parties comparing determining part 7-1 compares the N system master oscillator, the E system master oscillator, and the reference clock following the determining logic shown in the table of FIG. 7(b). The three parties comparing determining part 7-1 outputs the determination result to a master oscillator frequency abnormality state displaying part 7-2. In a case where that reference clock abnormality is determined, the three parties comparing determining part 7-1 reports this to a reference clock selection signal generating part 7-3. The reference clock selection signal generating part 7-3 sends a selection control signal for switching the active system reference clock to the backup system reference clock to the selector 9-5 selecting the reference clock.

If the frequency shift of the master oscillator of its own system is detected, this detection result is reported to an active system/backup system switching control part 7-4. In a case where the own system is the active system, the active system/backup system switching control part 7-4 immediately reports this to the abnormal portion determining part 1-3 of the backup system and sends an order for generating the selection signal for switching the system of the system clock to a system clock selection signal generating part 7-5. The system clock selection signal generating part 7-5 sends the selection control signal for switching the system clock of the active system to the system clock of the backup system to other devices of the system.

When the system clock of the active system is switched to the system clock of the backup system, the system clock selection signal generating part 7-5 sends a system clock selection signal so that the system clock of the backup system is switched at a high level section and it is possible to prevent a part of the system clocks from not existing.

By providing a function where not only data in a case where the number of generation of abnormality exceeds the threshold value but also row data of generation of abnormalities where error detection protection is not provided are stored in a memory and stored contents are read and displayed on the master oscillator frequency abnormality state displaying part 7-2, it is possible to confirm moment-to-moment performance of the master oscillator in detail.

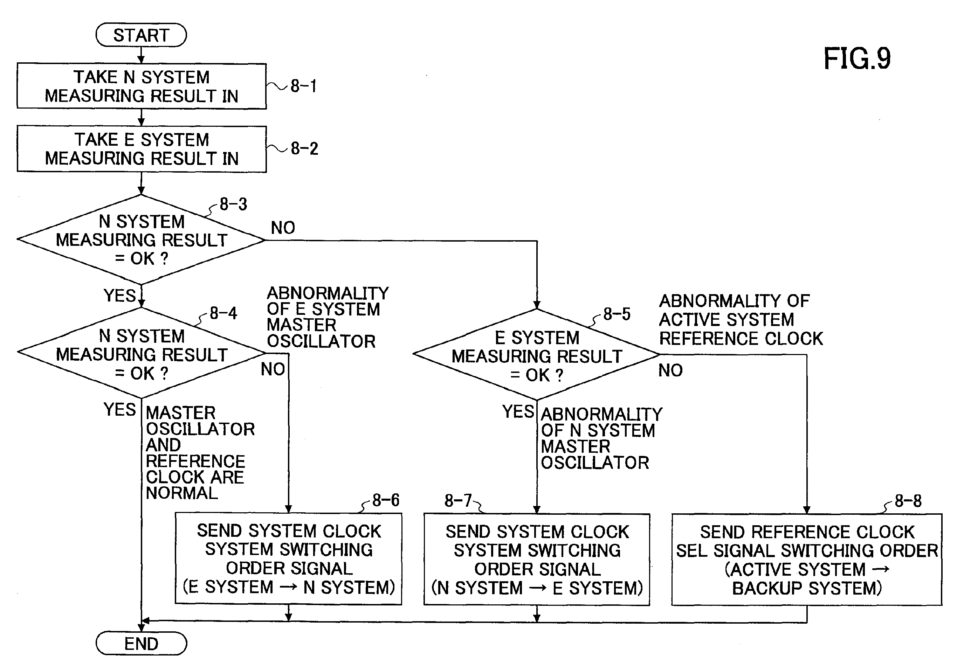

FIG. 9 is a flowchart of a process at the time when the frequency shift is detected at the abnormal portion determining part 1-3.

As shown in FIG. 9, the abnormal portion determining part 1-3 takes the N system measuring result in in step S8-1, takes the E system measuring result in in step S8-2, determines whether the N system measuring result is good ("OK") in step S8-3, and determines whether the E system measuring result is good ("OK") in step S8-4 and step S8-5.

As a result of step S8-3 and step S8-4, in a case where it is determined that the measuring result of the N system and the E system are good ("OK"), no processing step is applied and the entire process ends. In addition, as a result of step S8-3 and step S8-4, in a case where it is determined that the measuring result of the N system is good ("OK") and the measuring result of the E system is bad, abnormality of the E system master oscillator is determined so that an order signal for switching the system clock from the E system to the N system is sent in step S8-6.

As a result of step S8-3 and step S8-5, in a case where it is determined that the measuring result of the E system is good ("OK") and the measuring result of the N system is bad, abnormality of the N system master oscillator is determined so that an order signal for switching the system clock from the N system to the E system is sent in step S8-7. In addition, as a result of step S8-3 and step S8-5, in a case where it is determined that the measuring result of both the N system and the E system are bad, abnormality of the active system reference clock is determined so that an order signal for switching the reference clock from the active system to the backup system is sent by the reference clock selecting signal in step S8-8.

Thus, by using the reference clock and measuring the frequency deviation of three kinds of clocks, a problem of the related art discussed with reference to FIG. 1 where which side the frequency shift is generated cannot be determined by measuring due to confounding of both systems can be solved. In addition, the disadvantage of a structure where two master oscillators having the same stabilities are provided, namely a problem of high cost, can be prevented. Furthermore, it is possible to prevent the frequency shift clock from being sent by identifying the abnormality generation portion of the frequency shift at the operations time and by immediately switching the abnormality generation portion to a normal device.

According to the above-discussed embodiment of the present invention, it is possible to provide a system clock supplying device having a duplex structure formed by an own system and another system configured to generate a system clock based on output of a master oscillator in an own device, the system clock supplying device including: a frequency shift measuring determining part configured to measure frequency shift between a reference clock for system synchronization supplied from an outside and a clock output from a master oscillator of the own system and configured to send a frequency shift determining result based on the measuring result to a system clock supplying device of another system; and an abnormality portion determining part configured to determine whether the frequency shift is generated in an output clock of the master oscillator of the own system, an output clock of the master oscillator of the other system or the reference clock, on the basis of a frequency shift determining result of the master oscillator of the own system obtained from the frequency shift measuring determining part of the own system and frequency shift determining result of the master oscillator of the other system obtained from the frequency shift measuring determining part of the other system.

The frequency shift measuring determining part may determine the frequency shift, by comparing a count value of the reference clock within a counter gate time set by a monitoring reference timer using an output clock of the master oscillator to a determining threshold value. The frequency shift measuring determining part may include an error detection protecting part configured to measure the number of generations of abnormality determined as the frequency shift and configured to determine clock frequency abnormality in a case where the number of generations of abnormality reaches the threshold value. The error detection protecting part may count the number of generations of abnormality where the result determined as the frequency shift is continuously generated within a designated monitoring time and determine as a clock frequency abnormality a case where the number of generations of abnormality reaches the threshold value. On the basis of the frequency shift determining result of the master oscillator of the own system and the frequency shift determining result of the master oscillator of the other system, the abnormality portion determining part may determine that a system clock of a system where the frequency shift is generated is abnormal and a system clock of a system where the frequency shift is not generated is normal when determining the frequency shift is generated at only one of the master oscillator of the own system and the master oscillator of the other system, and the abnormality portion determining part may determine that the reference clock is abnormal when determining the frequency shifts are generated at the master oscillators of both the own system and the other system. In a case where the abnormality portion determining part determines that the frequency shift is generated at the master oscillator of the own system, the abnormality portion determining part may report this to the other system and sends a selection control signal for switching a system of the system clock. In a case where the abnormality portion determining part determines that the reference clock is abnormal, the abnormality portion determining part may send a selection control signal for switching a reference clock of an active system to a reference clock of a backup system.

According to the above-discussed embodiment of the present invention, it is possible to provide a frequency shift determining method of a master oscillator of a system clock supplying device having a duplex structure formed by an own system and another system configured to generate a system clock based on output of a master oscillator in an own device, the frequency shift determining method including: a frequency shift measuring determining step of measuring frequency shift between a reference clock for system synchronization supplied from an outside and a clock output from a master oscillator of the own system and sending a frequency shift determining result based on the measuring result to a system clock supplying device of the other system; and an abnormality portion determining step of determining whether the frequency shift is generated in an output clock of the master oscillator of the own system, an output clock of the master oscillator of the other system or the reference clock, on the basis of a frequency shift determining result of the master oscillator of the own system obtained in the frequency shift measuring determining step of the own system and frequency shift determining result of the master oscillator of the other system obtained from the frequency shift measuring determining part of the other system.

The frequency shift may be determined in the frequency shift measuring determining part by comparing a count value of the reference clock within a counter gate time set by a monitoring reference timer using an output clock of the master oscillator to a determining threshold value. The frequency shift measuring determining step may include an error detection protecting step of measuring the number of generations of abnormality determined as the frequency shift and determining clock frequency abnormality in a case where the number of generations of abnormality reaches the threshold value. In the error detection protecting step, the number of generation of abnormality where the result determined as the frequency shift may be continuously generated within a designated monitoring time is counted; and a clock frequency abnormality may be determined in a case where the number of generations of abnormality reaches the threshold value.

On the basis of the frequency shift determining result of the master oscillator of the own system and the frequency shift determining result of the master oscillator of the other system, in the abnormality portion determining step, it may be determined that a system clock of a system where the frequency shift is generated is abnormal and a system clock of a system where the frequency shift is not generated is normal when it is determined that the frequency shift is generated at only one of the master oscillator of the own system and the master oscillator of the other system, and it may be determined that the reference clock is abnormal when it is determined that the frequency shifts are generated at the master oscillators of both the own system and the other system.

Thus, according to the above-discussed embodiment of the present invention, the frequency shift of the master oscillator of the system clock supplying device is determined by comparing among the reference clock being input from outside and used for system synchronization, the output clock of the master oscillator of the own system provided in each of the system clock supplying device having a duplex structure for maintaining reliability of the system, and the output clock of the master oscillator of the other system. Therefore, it is possible to identify the clock of the frequency abnormality without providing an oscillator for measuring the frequency shift of the master oscillator.

In addition, measurement and determination of the frequency shift of these three types of clocks can be realized by firmware such as a DSP (Digital Signal Processor). Accordingly, without adding any hardware device to the system clock supplying device, it is possible to identify the abnormal portion of the output clock and the reference clock of the two systems master oscillators provided at the system clock supplying device. As a result of this, when the frequency shift of the master oscillator of the active system is detected, this is immediately reported to the backup system. By making determination in the system clock supplying device and switching the backup system to be the new active system, operations where the frequency shift is generated can be prevented.

In addition, the number of abnormalities of the frequency shift is measured. When the number of abnormalities reaches the threshold value, error detection protection whereby the clock frequency abnormality is determined is provided so that it is possible to prevent the frequency abnormality from being displayed at the short time frequency change.

Although the invention has been described with respect to a specific embodiment for a complete and clear disclosure, the appended claims are not to be thus limited but are to be construed as embodying all modifications and alternative constructions that may occur to one skilled in the art that fairly fall within the basic teaching herein set forth.

This patent application is based on Japanese Priority Patent Application No. 2006-339416 filed on December 18, 2006, the entire contents of which are hereby incorporated by reference.

## Claims

1. A system clock supplying device having a duplex structure formed by an own system and another system configured to generate a system clock based on output of a master oscillator in an own device, the system clock supplying device comprising:
a frequency shift measuring determining part configured to measure frequency shift between a reference clock for system synchronization supplied from an outside and a clock output from a master oscillator of the own system and configured to send a frequency shift determining result based on the measuring result to a system clock supplying device of another system; and
an abnormality portion determining part configured to determine whether the frequency shift is generated in an output clock of the master oscillator of the own system, an output clock of the master oscillator of the other system or the reference clock, on the basis of a frequency shift determining result of the master oscillator of the own system obtained from the frequency shift measuring determining part of the own system and frequency shift determining result of the master oscillator of the other system obtained from the frequency shift measuring determining part of the other system.

2. The system clock supplying device as claimed in claim 1,
wherein the frequency shift measuring determining part determines the frequency shift, by comparing a count value of the reference clock within a counter gate time set by a monitoring reference timer using an output clock of the master oscillator to a determining threshold value.

3. The system clock supplying device as claimed in claim 1,
wherein the frequency shift measuring determining part includes an error detection protecting part configured to measure the number of generations of abnormality determined as the frequency shift and configured to determine clock frequency abnormality in a case where the number of generations of abnormality reaches the threshold value.

4. The system clock supplying device as claimed in claim 3,
wherein the error detection protecting part counts the number of generations of abnormality where the result determined as the frequency shift is continuously generated within a designated monitoring time and determines as a clock frequency abnormality a case where the number of generations of abnormality reaches the threshold value.

5. The system clock supplying device as claimed in claim 1,
wherein, on the basis of the frequency shift determining result of the master oscillator of the own system and the frequency shift determining result of the master oscillator of the other system,
the abnormality portion determining part determines that a system clock of a system where the frequency shift is generated is abnormal and a system clock of a system where the frequency shift is not generated is normal when determining the frequency shift is generated at only one of the master oscillator of the own system and the master oscillator of the other system, and
the abnormality portion determining part determines that the reference clock is abnormal when determining the frequency shifts are generated at the master oscillators of both the own system and the other system.

6. The system clock supplying device as claimed in claim 5,
wherein, in a case where the abnormality portion determining part determines that the frequency shift is generated at the master oscillator of the own system, the abnormality portion determining part reports this to the other system and sends a selection control signal for switching a system of the system clock.

7. The system clock supplying device as claimed in claim 5,
wherein, in a case where the abnormality portion determining part determines that the reference clock is abnormal, the abnormality portion determining part sends a selection control signal for switching a reference clock of an active system to a reference clock of a backup system.

8. A frequency shift determining method of a master oscillator of a system clock supplying device having a duplex structure formed by an own system and another system configured to generate a system clock based on output of a master oscillator in an own device, the frequency shift determining method comprising:
a frequency shift measuring determining step of measuring frequency shift between a reference clock for system synchronization supplied from an outside and a clock output from a master oscillator of the own system and sending a frequency shift determining result based on the measuring result to a system clock supplying device of the other system; and
an abnormality portion determining step of determining whether the frequency shift is generated in an output clock of the master oscillator of the own system, an output clock of the master oscillator of the other system or the reference clock, on the basis of a frequency shift determining result of the master oscillator of the own system obtained in the frequency shift measuring determining step of the own system and frequency shift determining result of the master oscillator of the other system obtained from the frequency shift measuring determining part of the other system.

9. The frequency shift determining method of the master oscillator as claimed in claim 8,
wherein the frequency shift is determined in the frequency shift measuring determining part by comparing a count value of the reference clock within a counter gate time set by a monitoring reference timer using an output clock of the master oscillator to a determining threshold value.

10. The frequency shift determining method of the master oscillator as claimed in claim 8,
wherein the frequency shift measuring determining step includes an error detection protecting step of measuring the number of generations of abnormality determined as the frequency shift and determining clock frequency abnormality in a case where the number of generations of abnormality reaches the threshold value.

11. The frequency shift determining method of the master oscillator as claimed in claim 10,
wherein, in the error detection protecting step, the number of generation of abnormality where the result determined as the frequency shift is continuously generated within a designated monitoring time is counted; and
a clock frequency abnormality is determined in a case where the number of generations of abnormality reaches the threshold value.

12. The frequency shift determining method of the master oscillator as claimed in claim 8,
wherein, on the basis of the frequency shift determining result of the master oscillator of the own system and the frequency shift determining result of the master oscillator of the other system, in the abnormality portion determining step,
it is determined that a system clock of a system where the frequency shift is generated is abnormal and a system clock of a system where the frequency shift is not generated is normal when it is determined that the frequency shift is generated at only one of the master oscillator of the own system and the master oscillator of the other system, and
it is determined that the reference clock is abnormal when it is determined that the frequency shifts are generated at the master oscillators of both the own system and the other system.
